# EUROPEAN PATENT SPECIFICATION

(11) **EP 0 891 716 B1**
(45) Date of publication and mention of the grant of the patent: **04.06.2003**
(21) Application number: 98302404.3
(22) Date of filing: 30.03.1998
(51) Int. Cl.: A23G 1/00, A23G 1/04

(54) **Instant cocoa and method for its preparation**
Instant Kakao und Verfahren zur Herstellung
Cacao instantanée et procédé de preparation

(30) Priority: 17.07.1997 JP 20859297; 02.10.1997 JP 28608897
(43) Date of publication of application: 20.01.1999
(73) Proprietor: MORINAGA & CO., LTD., Minato-ku Tokyo 108 (JP)
(72) Inventor: Shimazaki, Noburo, c/o Morinaga & Co., Ltd., Yokohama-shi, Kanagawa-ken (JP); Inoue, Teruyuki, c/o Morinaga & Co., Ltd., Yokohama-shi, Kanagawa-ken (JP)
(74) Representative: Beacham, Annabel Rose

(56) References cited:
- WO-A-94/24883
- DE-A- 1 492 842
- FR-A- 348 073
- GB-A- 823 556
- NL-A- 7 404 945
- US-A- 4 882 181
- PATENT ABSTRACTS OF JAPAN vol. 011, no. 047 (C-403), 13 February 1987 & JP 61 212244 A (AJINOMOTO GENERAL FOOD KK), 20 September 1986 -& DATABASE WPI Derwent Publications Ltd., London, GB; AN 86-288849 XP002082249

## Description

### FIELD OF THE INVENTION

The present invention relates to an instant cocoa which contains cacao mass and/or cocoa powder and a milk material, from which an instant drink can be prepared simply by adding hot water, and a method for its preparing.

### BACKGROUND OF THE INVENTION

Cocoa is a luxury drink having a high nutritive value and is prepared by dissolving the cocoa in hot water or milk. Cocoa powder is obtained by pressing alkalized or non-alkalized cocoa mass to separate cacao butter, followed by pulverization. Instant cocoa is prepared by first mixing the cocoa powder with other materials such as milk powder or saccharides so that cocoa can be obtained simply by dissolving the instant cocoa in hot water or milk.

As conventional methods for preparing instant cocoa, there have been known (1) a method wherein cocoa powder, a milk material such as whole milk powder or skim milk powder, and saccharides such as sugar, are mixed and pulverized to prepare a product; (2) a method wherein to improve the solubility, the pulverized product of method (1) is subjected to granulation in a fluidized bed granulator; and (3) a method wherein cocoa powder, saccharides and the like are dissolved in warm water and subjected to freeze-drying (JP-A 8-214780).

However, as cocoa powder contains water-insoluble ingredients of cacao nib, in the above methods (1) and (2), the insoluble ingredients make the drink feel rough to the tongue and give powdery taste. Further, in both methods (1) and (2), it is necessary to use a milk material in a powdery state such as whole milk powder, skim milk powder or creaming powder, and it is impossible to use fresh milk or skim milk as the milk material. The original good flavor of the dairy product cannot be obtained.

On the other hand, in method (3), the powdery feeling can be reduced. However, freeze-drying is not easy when a milk material is included. The product thus has the drawback that it is necessary to add a milk material in hot water to prepare a hot cocoa drink, or to dissolve the freeze-dried product in hot milk. In both cases, the convenience of instant drinks which are prepared simply by addition of hot water cannot be achieved. Further, the freeze-dried product has a porous block-form which is bulky as compared with powdered products having the same weight.

On the other hand, cacao mass is obtained by grinding roasted cacao beans which contains about 55% of cacao butter. The cacao mass is solid at room temperature and melts into a liquid state on heating. Since the cacao butter content in the cacao mass is very high, the cacao mass is not easy to powder and it is impossible to use it for conventional instant cocoa. Further, there is some material of cacao mass processed in a powdery state, but when such a material is used for an instant cocoa, there is a drawback that adequate solubility can not be obtained when served as a drink.

### SUMMARY OF THE INVENTION

Accordingly, the object of the present invention is to provide an instant cocoa which can be served as a cocoa drink simply by addition of hot water and gives a less rough and powdery feeling to the tongue, and in which the ingredients are well harmonized and have a mild and good taste and a rich flavor.

The invention thus provides comprises an instant cocoa which comprises particles obtainable by dissolving or dispersing a starting material comprising cacao mass or cocoa powder, or both, in heated milk or (when the starting material also contains milk powder) in heated water, followed by spray drying to provide particles in which the ingredients are uniformly distributed and integrated.

The invention also provides a method for preparing an instant cocoa which includes the steps of dissolving or dispersing a starting material comprising cacao mass or cocoa powder or both in heated milk or (when the starting material also contains milk powder) in heated water, followed by spray drying to form particles.

The particles formed in the spray drying step may be further processed for example by granulation or pulverisation, or by admixture with other ingredients such as sweeteners or flavorants.

In the present invention, by firstly dissolving the starting material in warm or hot milk, or in warm or hot water when the starting material includes milk powder, the ingredients are uniformly melted (the oil and fat contents are dispersed), and by then spray-drying, particles in which the ingredients are uniformly distributed and integrated can be formed. Even if the particles contain cacao mass, the particles are rapidly dissolved without remaining in a granular state, and no oil separation occurs in spite of the higher fat content. Thus when the instant cocoa is drunk, no roughness to the tongue or powdery feeling is given, and a fresh and excellent flavor can be obtained. Further, since the instant cocoa of the present invention contains a milk material, there is no need to dissolve it in milk, and tasty cocoa can be prepared simply by addition of hot water.

### BRIEF DESCRIPTION OF THE DRAWINGS

Fig. 1 is a scanning-type electron microscope photograph of a dried powder obtained in Example 2 by spray-drying a stock liquor with 150 magnification.

Fig. 2 is a scanning-type electron microscope photograph of a dried powder obtained in Example 5 by spray-drying a stock liquor with 150 magnification.

Fig. 3 is a scanning-type electron microscopic photograph of a powder obtained by spray- drying a stock liquor to obtain a dried powder and then granulating the dried powder by a fluidized bed granulator, as in Example 6, with 150 magnification.

Fig. 4 is a scanning-type electron microscope photograph of a powder obtained by mixing starting material components and pulverizing the mixture in a pulverizer, as in Comparative Example 1, with 150 magnification.

Fig. 5 is a scanning-type electron microscope photograph of a solid cocoa obtained in Comparative Example 3 by freeze-drying a stock liquor with 150 magnification.

### DESCRIPTION OF THE PREFERRED EMBODIMENTS

In the present invention, the cacao mass as a starting material component is obtained by, for example, selecting cacao beans in a cleaner, crushing the beans in a crusher, removing the shells in a winnower, adding an alkalizing agent in a reactor, and roasting the alkalized nib in a roaster, followed by grinding in a mill. Then, cacao cake is gained by removing the part of cocoa butter from the cacao mass in a cocoa press. Further, the cocoa powder is produced by pulverizing the cake to fine powder in a pulverizer. In the above processes, the cacao mass may or may not be alkalized, or an alkalized and a non-alkalized product may be used in combination.

The cacao mass supplies a mild, rich and thick chocolate flavor to an instant cocoa because of the high cocoa butter content. It is therefore preferable to use cocoa powder and cacao mass in combination as the starting material as compared to the use of either one alone. Further, when the cacao mass and cocoa powder are used in combination as the starting material, the flavor specific to cocoa can be obtained more reliably as compared to the cases where either one is used. When the cacao mass and cocoa powder are used in combination, the proportion of the cacao mass and cocoa powder is preferably 1:0.1 to 9 by weight. When the proportion of the cocoa powder is less than the above range, the effect of the addition of the cocoa powder is small. When the proportion of the cocoa powder is more than the above range, the proportion of the cacao mass is relatively small and therefore the effect of imparting the rich and thick flavor by the cacao mass is small.

As the milk material, a milk product which is not powdered and maintains the original flavor of milk, such as milk, skim milk or raw cream, is preferably used. Milk powder is already spray-dried into a powdered state, and it has a drawback that when it is dissolved in warm water or hot water and spray-dried again, there is a further deterioration in flavor. On the other hand, a non-powdered product such as milk maintains original flavor, and even after spray-drying once, the deterioration of the flavor can be kept to a relatively low level. A milk powder such as whole milk powder or skim milk powder can however be used particularly in combination with milk. When milk powder is used, it is preferred first to dissolve it in warm water or the like, and then add and mix cocoa powder or the like to this solution. Alternatively, it is also preferred to add and mix the milk powder together with the cocoa powder to milk or the like.

A sweetener can be omitted from the product to allow the user to add it as desired when preparing the drink. However, a sweetener such as a saccharide is preferably added beforehand so that cocoa having a sweet taste can readily be obtained simply by addition of hot water. The saccharide may be a disaccharide such as sucrose or lactose, a monosaccharide such as dextrose or fructose, a starch hydrolyzate such as glucose syrup or dextrin, and their reduced products, for example, a reduced starch hydrolyzate or a reducing sugar such as sorbitol or maltitol, or mixtures thereof.

Other materials which may be included with the cacao or cocoa starting material are for example starches, oils and fats, emulsifying agents, stabilizing agents, salt, perfumes, spices, nut paste, coffee and other seasoning components. As the emulsifying agent, for example, sucrose fatty acid ester, glycerol fatty acid ester and lecithin are preferably used. As the stabilizing agent, commonly used materials such as xanthane gum and carageenan may be used.

A preferred composition of the above starting materials comprises from 30 to 300 parts by weight of milk or skim milk, from 10 to 35 parts by weight of cacao mass and/or cocoa powder, from 0 to 25 parts by weight of a milk powder such as whole milk powder or skim milk powder, from 0 to 25 parts by weight of sugar, from 5 to 25 parts by weight of other saccharide such as lactose, from 0 to 0.5 part by weight of salt, and from 0 to 2 parts by weight of an emulsifying agent.

In the preferred method of the invention, a solution of heated milk, skim milk or milk powder dissolved in hot water is first prepared and then cacao mass, cocoa powder, and, if used, milk powder, a saccharide and other starting materials are added and dissolved. The solution of heated milk, skim milk or milk powder dissolved in hot water, is preferably first heated to from 40-95°C, preferably 50 to 70°C, by which the solubility of the cacao mass, cocoa powder and the like can be improved.

After the starting materials are dissolved, the solution is preferably homogenized in a homogenizer to give high uniformity in the spray dried product, so that uniformly distributed particles can be formed and the non-uniformity and the roughness to the tongue when dissolved in hot water can be remarkably reduced. This solution is then heated e.g. to from 60 to 95°C and spray dried. The spray drying may be carried out under usual conditions, with for example a hot-air temperature of from 150 to 270°C and exhaust air temperature of from 80 to 130°C. Further, the brix degree of the solution when spray dried is preferably 10 to 60. When the brix degree of the above solution is less than 10, the efficiency is poor, and when the brix degree is more than 60, the spray-drying is difficult to perform.

The particles obtained by spray drying have a substantially spherical shape and the ingredients of the starting material are uniformly distributed, as can be observed with a microscope. The average particle size is from about 20 to 100 µm. Generally, when the average particle size is less than 20 µm, the solubility is poor, and when it is more than 100 µm, the spray-drying efficiency is reduced to an uneconomical level. The product is an apparently smooth and fine powder from the viewpoints of appearance and touch as compared with conventional instant cocoa which is obtained simply by mixing e.g. cocoa powder, milk powder and a saccharide.

The particles may be further subjected to granulation into a granular form of a suitable size. By the granulation, the solubility in water or hot water is further increased, whereby cocoa can be prepared more easily. Conventional granulation methods may be used, but the fluidized bed granulation and agitation granulation methods are especially preferred.

The instant cocoa of the present invention may be solely made of the spray-dried powder or the granules obtained by granulating the spray-dried powder. However, for example, a sweetener, e.g. a saccharide such as sucrose, or a flavorant may further be added thereto to prepare products. Otherwise, a sweetener or flavorant may for example be added to the spray-dried powder and the mixture can be pulverized to obtain a fine and uniform product.

The invention will be explained in further detail in the following examples ("parts" means "parts by weight").

### EXAMPLE 1

16 parts of cacao mass, 10 parts of lactose, 0.1 part of salt and 0.2 part of an emulsifying agent were added to 200 parts of milk heated to 60°C (23.6 % milk solid content), and stirred and mixed in a blender for 10 minutes. This mixture was homogenized in a homogenizer at 150 kg/cm².

This solution was heated to 90°C and then spray-dried under such conditions that the drying-air temperature was 230°C and the exhaust-air temperature was 110°C, to obtain a dried powder. 40 parts of sugar was added to 55 parts of this dried powder, and mixed to obtain an instant cocoa of the present invention.

20 g of this instant cocoa was dissolved in 100 ml of hot water. The obtained cocoa drink gave a fresh milky impression, a mild and delicious taste, and a rich flavor, without powdery feeling or roughness to the tongue.

### EXAMPLE 2

16 parts of cocoa powder (with cacao butter from 22 to 24%), 10 parts of lactose, 0.1 part of salt and 0.2 part of an emulsifying agent were added to 200 parts of milk heated to 60°C (23.6% milk solid content), and stirred and mixed in a blender for 10 minutes. This mixture was homogenized in a homogenizer at 150 kg/cm².

This solution was heated to 90°C and then spray-dried under such conditions that the drying- air temperature was 230°C and the exhaust-air temperature was 110°C, to obtain a dried powder. 40 parts of sugar was added to 55 parts of this dried powder, and mixed to obtain an instant cocoa of the present invention.

20 g of this instant cocoa was dissolved in 100 ml of hot water. The obtained cocoa drink gave a fresh milky impression, a well-balanced mild and delicious taste, and an original flavor, without powdery feeling or roughness to the tongue.

### EXAMPLE 3

15 parts of cocoa powder (with cacao butter from 22 to 24%), 4 parts of whole milk powder, 5 parts of skim milk powder, 5 parts of sugar, 8 parts of lactose, 0.3 part of an emulsifying agent and 0.1 part of salt were added to 100 parts of milk heated to 60°C (11.8% milk solid content), and stirred and mixed in a blender for 10 minutes. This mixture was homogenized in a homogenizer at 150 kg/cm².

This solution was spray-dried under such conditions that the drying-air temperature was 230°C and the exhaust-air temperature was 110°C, to obtain a dried powder. This dried powder was granulated in a fluidized bed granulator, and dried 35 parts of sugar was added to 60 parts of this dried powder, and mixed to obtain an instant cocoa of the present invention.

20 g of this instant cocoa was dissolved in 100 ml of hot water. The obtained cocoa drink gave a fresh milky impression, a well-balanced mild and delicious taste, and an original rich flavor, without powdery feeling or roughness to the tongue.

### EXAMPLE 4

17 parts of cocoa powder (with cacao butter from 10 to 12%), 8 parts of whole milk powder, 2 parts of raw cream, 0.1 part of salt and 0.2 part of an emulsifying agent were added to 100 parts of milk heated to 60°C (11.8% milk solid content), and stirred and mixed in a blender for 10 minutes. This mixture was homogenized in a homogenizer at 150 kg/cm².

This solution was spray-dried under such conditions that the drying-air temperature was 230°C and the exhaust-air temperature was 110°C, to obtain a dried powder. 40 parts of sugar was added to 55 parts of this dried powder, and mixed. This powder mixture was granulated in a fluidized bed granulator, and dried to obtain an instant cocoa of the present invention.

20 g of this instant cocoa was dissolved in 100 ml of hot water. The obtained cocoa drink gave a fresh milky impression, a well-balanced mild and delicious taste, and an original flavor, without powdery feeling or roughness to the tongue.

### EXAMPLE 5

3 parts of cacao mass, 13 parts of cocoa powder (with cacao butter from 22 to 24%), 10 parts of lactose, 0.1 part of salt and 0.2 part of an emulsifying agent were added to 200 parts of milk heated to 60°C (with 23.6% of milk solid), and stirred and mixed in a blender for 10 minutes. This mixture was homogenized in a homogenizer at 150 kg/cm².

This solution was heated to 90°C and then spray-dried under such conditions that the drying-air temperature was 230°C and the exhaust-air temperature was 110°C, to obtain a dried powder. 40 parts of sugar was added to 55 parts of this dried powder, and mixed to obtain an instant cocoa of the present invention.

20 g of this instant cocoa was dissolved in 100 ml of hot water. The obtained cocoa drink gave a fresh milky impression, a mild and delicious taste, and a rich flavor, without powdery feeling or roughness to the tongue.

### EXAMPLE 6

9 parts of cacao mass, 9 parts of cocoa powder (with cacao butter from 22 to 24%), 4 parts of whole milk powder, 5 parts of skim milk powder, 5 parts of sugar, 8 parts of lactose, 0.2 part of an emulsifying agent and 0.1 part of salt were added to 100 parts of milk heated to 60°C (11.8% milk solid content), and stirred and mixed in a blender for 10 minutes. This mixture was homogenized in a homogenizer at 150 kg/cm².

This solution was spray-dried under such conditions that the drying-air temperature was 230°C and the exhaust-air temperature was 110°C, to obtain a dried powder. This dried powder was granulated in a fluidized bed granulator, and then dried. 35 parts of sugar was added to 60 parts of this powder, and mixed to obtain an instant cocoa of the present invention.

20 g of this instant cocoa was dissolved in 100 ml of hot water. The obtained cocoa drink gave a fresh milky impression, a well-balanced mild and delicious taste, and an original flavor, without powdery feeling or roughness to the tongue.

### EXAMPLE 7

2 parts of cacao mass, 15 parts of cocoa powder (with cacao butter from 10 to 12%), 8 parts of whole milk powder, 2 parts of raw cream, 0.1 part of salt and 0.2 part of an emulsifying agent were added to 100 parts of milk heated to 60°C (11.8% milk solid content), and stirred and mixed in a blender for 10 minutes. This mixture was homogenized in a homogenizer at 150 kg/cm².

This solution was spray-dried under such conditions that the drying-air temperature was 230°C and the exhaust-air temperature was 110°C, to obtain a dried powder. 40 parts of sugar was added to 55 parts of this dried powder, and mixed. This powder mixture was pulverized in a pulverizer to obtain an instant cocoa of the present invention.

20 g of this instant cocoa was dissolved in 100 ml of hot water. The obtained cocoa drink gave a fresh milky impression, a well-balanced mild and delicious taste, and an original flavor, without powdery feeling or roughness to the tongue.

### COMPARATIVE EXAMPLE 1

16 parts of cocoa powder (with cacao butter from 22 to 24%), 24.3 parts of whole milk powder, 10 parts of lactose, 0.1 part of salt and 44.3 parts of sugar were thoroughly mixed, and then pulverized in a pulverizer, to obtain an instant cocoa.

20 g of this instant cocoa was dissolved in 100 ml of hot water. The obtained cocoa drink gave much more powdery feeling as compared with the cocoa drinks obtained in Examples 1 to 7 and lacked a mild impression.

### COMPARATIVE EXAMPLE 2

16 parts of cocoa powder (with cacao butter from 22 to 24%), 24.3 parts of whole milk powder, 10 parts of lactose, 0.1 part of salt and 44.3 parts of sugar were thoroughly mixed, and then pulverized in a pulverizer. The thus obtained powder was granulated in a fluidized bed granulator, and dried to obtain an instant cocoa.

20 g of this instant cocoa was dissolved in 100 mi of hot water, the obtained cocoa drink gave much more powdery feeling as compared with the cocoa drinks obtained in Examples 1 to 7 and lacked a mild impression.

### COMPARATIVE EXAMPLE 3

52 parts of cocoa powder (with cacao butter from 22 to 24%) and 48 parts of sugar were mixed. To this mixture, water was added to obtain a suspension containing 18% solids content. This suspension was heated to 92°C with stirring to gelatinize starch, and then homogenized in a homogenizer at 80 kg/cm², cooled to 40°C, and filled into a mold, followed by freeze-drying, to obtain an instant cocoa.

12 g of this solid cocoa was dissolved in 100 ml of hot milk. The obtained cocoa drink was a tasty milk cocoa of good body giving a less powdery feeling.

### TEST EXAMPLE 1

With respect to each of cocoa obtained in Examples 1 to 7 and Comparative Examples 1 and 2, organoleptic tests were conducted by 20 panelists.

Evaluation of flavor is represented by the average mark of 20 panelists on the scale:- very good: 5, good: 4, normal: 3, not good: 2, and poor: 1.

Further, evaluation of the powdery feeling and roughness to the tongue is represented by the average mark of 20 panelists on the scale:- no feel: -2, hardly any feel: -1, uncertain: 0, slight feel: +1, and very noticeable feel: +2. The results are shown in Table 1.

**Table 1**

| Example | Flavor | Powdery feeling and roughness to the tongue |
|---|---|---|
| 1 | 4.4 | -1.6 |
| 2 | 4.8 | -1.6 |
| 3 | 4.6 | -1.4 |
| 4 | 4.4 | -1.4 |
| 5 | 4.7 | -1.5 |
| 6 | 4.6 | -1.6 |
| 7 | 4.5 | -1.4 |
| Comp. Ex. 1 | 3.7 | +1.2 |
| Comp. Ex. 2 | 3.6 | +1.0 |

As shown in Table 1, the cocoa drinks of Examples 1 to 7 are clearly excellent in flavor and have a less powdery feeling and roughness to the tongue as compared with the cocoa drinks of Comparative Examples 1 and 2.

### TEST EXAMPLE 2

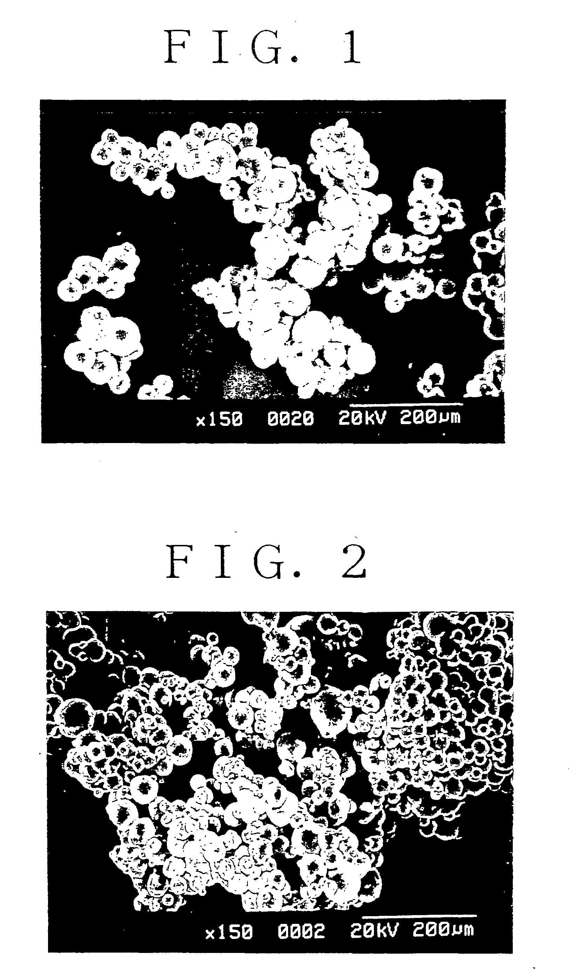

Scanning type electromicroscope photographs with 150 magnification were taken for (1) a dried powder obtained in Example 2 by spray-drying a stock solution, (2) a dried powder obtained in Example 5, by spray-drying a stock solution (3) a powder obtained by spray-drying a stock solution and granulating the dried powder in a fluidized bed granulator, as in Example 6, (4) a powder obtained by mixing starting material components and pulverizing the mixture in a pulverizer, as in Comparative Example 1, and (5) a solid cocoa obtained in Comparative Example 2 by freeze-drying a stock solution. The photographs are shown in Figures 1 to 5, respectively.

As shown in Figure 1, in the spray-dried powder of Example 2, the cocoa powder, milk component, saccharide and the like are uniformly incorporated in the particles, and the particles are formed into a clear spherical shape. Further, the particles have an average particle size of from 20 to 100 µm and show less unevenness in the particle size.

As shown in Figure 2, in the spray-dried powder of Example 5, the cacao mass, cocoa powder, milk component, saccharide and the like are uniformly incorporated in the particles, and the particles are formed into a clear spherical shape. Further, the particles have an average particle size of from 20 to 100 µm and show less unevenness of the particle size.

As shown in Figure 3, in the powder obtained by granulating the spray-dried powder of Example 6, the powder components of e.g. cacao mass, cocoa powder, milk component and saccharide are attached together by granulation to form large particles. The shape of the particles is irregular and the variation of the average particle size is as large as from 100 to 450 µm.

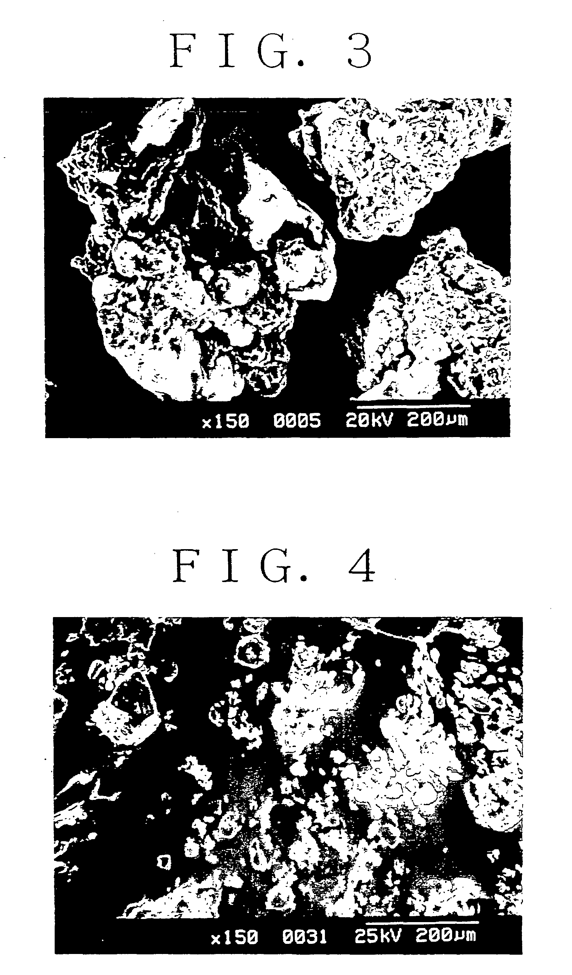

As shown in Figure 4, in the powder obtained by mixing the starting material components and pulverizing the mixture of Comparative Example 1, it is found that the particles such as cocoa powder, milk powder and saccharide are pulverized and merely dispersed. The shape of particles is irregular and the average particle size is from 40 to 130 µm.

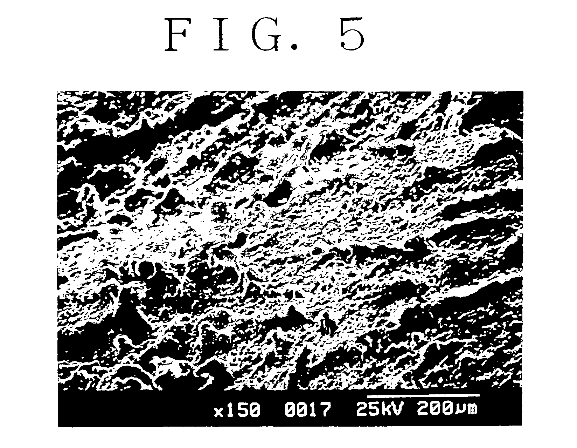

As shown in Figure 5, the solid cocoa obtained by freeze-drying of Comparative Example 3 is found to have a porous block form and properties different from those of the products of Figures 1 to 4.

## Claims

1. An instant cocoa which comprises particles obtainable by dissolving or dispersing a starting material comprising cacao mass or cocoa powder, or both, in heated milk or when the starting material also contains milk powder in heated water, followed by spray drying to provide particles in which the ingredients are uniformly distributed and integrated.

2. An instant cocoa according to claim 1 in which the particles are granulated or pulverised, optionally together with further ingredients.

3. An instant cocoa according to claim 1 or claim 2 in which the starting material is dissolved or dispersed in milk.

4. An instant cocoa according to any preceding claim, wherein the starting material further contains a saccharide.

5. An instant cocoa according to any preceding claim, wherein the starting material further contains milk powder and/or cream.

6. An instant cocoa according to any preceding claim, wherein the particles have a substantially spherical shape and an average particle size of from 20 to 100 µm.

7. A method for preparing an instant cocoa which includes the steps of dissolving or dispersing a starting material comprising cacao mass or cocoa powder or both in heated milk or when the starting material also contains milk powder in heated water, followed by spray drying to form particles.

8. A method according to claim 7 in which the starting material is dissolved or dispersed in milk, optionally together with one or more further ingredients.

9. A method according to claim 7 or claim 8, wherein after the spray-drying, granulation is carried out, optionally in the presence of one or more further ingredients.

10. A method according to claim 7 or 8, wherein after the spray drying, pulverization is carried out, optionally in the presence of one or more further ingredients.

11. A method according to any of claims 7 to 10, wherein the solution or dispersion of the starting material is homogenised before the spray drying step.

12. A method according to any of claims 7 to 11, wherein the starting material further contains a saccharide or other sweetener.

## Patentansprüche

1. Instantkakao, der Partikel umfaßt, die erhalten werden können durch Lösen oder Dispergieren eines Kakaomasse oder Kakaopulver oder beides umfassenden Ausgangsmaterials in erhitzter Milch oder, sofern das Ausgangsmaterial auch Milchpulver enthält, in erhitztem Wasser, gefolgt durch Sprühtrocknen, um Partikel bereitzustellen, in denen die Bestandteile gleichförmig verteilt und integriert sind.

2. Instantkakao nach Anspruch 1, in dem die Partikel granuliert oder pulverisiert sind, wahlweise zusammen mit weiteren Bestandteilen.

3. Instantkakao nach Anspruch 1 oder 2, in dem das Ausgangsmaterial in Milch gelöst oder dispergiert ist.

4. Instantkakao nach einem der voranstehenden Ansprüche, wobei das Ausgangsmaterial des weiteren ein Saccharid enthält.

5. Instantkakao nach einem der voranstehenden Ansprüche, wobei das Ausgangsmaterial des weiteren Milchpulver und/oder Rahm enthält.

6. Instantkakao nach einem der voranstehenden Ansprüche, wobei die Partikel im wesentlichen Kugelform und eine durchschnittliche Partikelgröße von 20 bis 100 µm aufweisen.

7. Verfahren zur Herstellung eines Instantkakao, das die Schritte des Lösens oder Dispergierens einer Kakaomasse oder eines Kakaopulver oder beides umfassenden Ausgangsmaterials in erhitzter Milch oder, sofern das Ausgangsmaterial auch Milchpulver umfaßt, in erhitztem Wasser, gefolgt von Sprühtrocknen zum Bilden von Partikeln umfaßt.

8. Verfahren nach Anspruch 7, in dem das Ausgangsmaterial in Milch gelöst oder dispergiert wird, wahlweise zusammen mit einem oder mehreren Bestandteilen.

9. Verfahren nach Anspruch 7 oder 8, wobei nach dem Sprühtrocknen eine Granulation durchgeführt wird, wahlweise in Gegenwart von einem oder mehreren weiteren Bestandteilen.

10. Verfahren nach Anspruch 7 oder 8, wobei nach dem Sprühtrocknen eine Pulverisierung durchgeführt wird, wahlweise in Gegenwart von einem oder mehreren weiteren Bestandteilen.

11. Verfahren nach einem der Ansprüche 7 bis 10, wobei die Lösung oder Dispersion des Ausgangsmaterials vor dem Sprühtrocknungsschritt homogenisiert wird.

12. Verfahren nach einem der Ansprüche 7 bis 11, wobei das Ausgangsmaterial des weiteren ein Saccharid oder anderes Süßungsmittel umfaßt.

## Revendications

1. Cacao instantané, qui comprend des particules pouvant être obtenues par dissolution ou dispersion d'une matière de départ comprenant une masse de cacao ou une poudre de cacao ou les deux, dans du lait chauffé ou, lorsque la matière de départ contient aussi de la poudre de lait, dans de l'eau chauffée, puis séchage par atomisation pour fournir des particules dans lesquelles les composants sont uniformément distribués et intégrés.

2. Cacao instantané suivant la revendication 1, dans lequel les particules sont granulées ou pulvérisées, éventuellement avec d'autres composants.

3. Cacao instantané suivant la revendication 1 ou la revendication 2, dans lequel la matière de départ est dissoute ou dispersée dans du lait.

4. Cacao instantané suivant l'une quelconque des revendications précédentes, dans lequel la matière de départ contient de plus un saccharide.

5. Cacao instantané suivant l'une quelconque des revendications précédentes, dans lequel la matière de départ contient de plus de la poudre de lait et/ou de la crème.

6. Cacao instantané suivant l'une quelconque des revendications précédentes, dans lequel les particules ont une forme substantiellement sphérique et une dimension particulaire moyenne de 20 à 100 µm.

7. Procédé pour préparer un cacao instantané, qui comprend les étapes de dissolution ou de dispersion d'une matière de départ comprenant une masse de cacao ou une poudre de cacao ou les deux, dans du lait chauffé ou, lorsque la matière de départ contient aussi de la poudre de lait, dans de l'eau chauffée, puis de séchage par atomisation pour former des particules.

8. Procédé suivant la revendication 7, dans lequel la matière de départ est dissoute ou dispersée dans du lait, éventuellement avec un ou plusieurs autres composants.

9. Procédé suivant la revendication 7 ou la revendication 8, dans lequel, après le séchage par atomisation, une granulation est effectuée, éventuellement en présence d'un ou de plusieurs autres composants.

10. Procédé suivant la revendication 7 ou la revendication 8, dans lequel, après le séchage par atomisation, une pulvérisation est effectuée, éventuellement en présence d'un ou de plusieurs autres composants.

11. Procédé suivant l'une quelconque des revendications 7 à 10, dans lequel la solution ou la dispersion de la matière de départ est homogénéisée avant l'étape de séchage par atomisation.

12. Procédé suivant l'une quelconque des revendications 7 à 11, dans lequel la matière de départ contient de plus un saccharide ou un autre édulcorant.
